# EUROPEAN PATENT APPLICATION

(11) **EP 1 410 998 A2**
(43) Date of publication of application: **21.04.2004**
(21) Application number: 03078279.1
(22) Date of filing: 17.10.2003
(51) Int. Cl.: B65D 25/30, B65D 1/24, B29C 45/16

(54) **Container having at least one handle**

(30) Priority: 17.10.2002 GB 0224175
(71) Applicant: D.W. PLASTICS, naamloze vennootschap, 3740 Bilzen-Beverst (BE)
(72) Inventor: Wambeke, Alain Marcel, 3440 Zoutleeuw (BE)
(74) Representative: Beitsma, Gerhard Romano

(57) **Abstract**

A container (1) for storing and/or transporting objects is made of a plastics material and comprises a base (2) and at least two side walls (3). At least one side wall is provided with a handle section (6) covered at least partially by a gripping layer (7) made out of a relatively soft thermoplastic material. The handle section (6) is provided with anchoring ribs (8) and/or through holes (9) for anchoring the gripping layer onto the handle section. The anchoring ribs (8) may have a substantially triangular and/or meandering shape. The material of the gripping layer is preferably chosen so as to ensure an excellent bonding.

## Description

The present invention relates to a container having at least one handle. More in particular, the present invention relates to a plastic container for storing and/or transporting objects, such as bottles, which container has a handle provided with a relatively soft gripping layer. A container of this type is known from European Patent Application EP 1.000.865 (D. W. Plastics).

Containers made of plastics, such as polyethylene, are increasingly popular. Such containers are, for example, used as bottle crates for storing and transporting bottles, such as beer bottles and water bottles. In order to lift and/or carry the container it is typically provided with two handles in opposite side walls. A central handle may also be provided. To facilitate the handling of the container and to provide a more comfortable grip it has been proposed to provide the handles with a layer or inset of a relatively soft material, for instance a plastomer. This relatively soft layer, hereinafter called gripping layer, can be applied in various ways.

In European Patent Application EP 1.000.865 mentioned above it is suggested that the layer of plastomer is injection-moulded on the handle part. The relatively soft gripping layers completely covers the circumference of the handle parts. The bonding of the layers onto the handle parts depends on the material properties and the moulding process. As a result, a proper bonding is not guaranteed, which could result in the soft layers rotating around the handle part when the container is lifted. In addition, this known method of applying the gripping layer has the disadvantage that the design is limited to a layer which circumferentially encloses the handle. A similar container handle, having the same disadvantages, is disclosed in German Patent Application DE 4.022.884 (Schoeller-Plast), see Fig. 5. Said German Patent Application also discloses (Figs. 1-4) the use of separately moulded gripping parts which are mounted on the handles by means of snap-fitting or similar clamping techniques. This has the disadvantage that dirt can easily collect in the seams between the gripping layer and the handle. As a result, such handles are often rejected for hygienic reasons. In addition, there is the risk of such snap-fitted gripping parts coming loose when the handle is firmly gripped and/or twisted.

It is therefore an object of the present invention to provide a container having a handle with a relatively soft gripping layer which is securely mounted on the handle while offering a greater freedom of design.

It is another object of the present invention to provide an improved handle for a container.

It is a further object of the present invention to provide an improved method of producing a container having a handle.

Accordingly, the present invention provides a container for storing and/or transporting objects, the container being made of a plastics material and comprising a base extending in a first direction and at least two side walls extending from the base in a second, substantially perpendicular direction, at least one side wall being provided with a handle section covered at least partially by a gripping layer made out of a thermoplastic material having a smaller hardness than said plastics material and being applied on the handle section during a moulding process, wherein the handle section is provided with anchoring means for anchoring the gripping layer on the handle section.

By providing anchoring means the gripping layer may be securely fastened to the handle section, thus preventing any movement of the gripping layer in use. In addition, it is possible to provide alternative designs in which the gripping layer does not completely surround the handle. A container of the present invention can, for example, have a handle of which only the lower side has a gripping layer.

By applying the gripping layer on the handle section during a moulding process the problems with snap-fitted gripping parts are avoided.

In a preferred embodiment, the anchoring means comprise anchoring ribs protruding from a plane defined by the handle section, the anchoring ribs being at least partially embedded in the gripping layer. Thus the gripping layer is mechanically secured as its material at least partially fills the spaces between the individual anchoring ribs. Also, the bonding surface of the gripping layer is effectively enlarged. In addition, the anchoring ribs decrease the quantity of gripping layer material required. It is noted that said plane defined by the handle section is not necessarily flat but may also be curved, e.g. convex, concave or undulating. It is further noted that above-mentioned German Patent Application DE 4.022.884 discloses (Fig. 2) closely spaced vertical lamellae protruding from a handle section which is provided with a relatively soft gripping layer. These known lamellae, however, only support but do not anchor the gripping layer, it is not suggested in said German Patent Application that the lamellae be embedded in the gripping layer. In addition, the known lamellae are present in a handle having a gripping layer of the snap-fit type, not a gripping layer which is moulded on the handle.

It is preferred that the anchoring ribs are shaped so as to extend in more than one direction in said plane. That is, the anchoring ribs may extend e.g. horizontally in addition to vertically, or may extend under an acute angle. While parallel anchoring ribs extending in a single direction would allow the gripping layer to slide in that direction, anchoring ribs extending in more than one direction prevent such sliding. Accordingly, the anchoring ribs may have a substantially triangular and/or meandering shape.

In other advantageous embodiments the anchoring ribs are defined by curved recesses and/or by edges of a zigzag structure in the handle section. This results in a handle section which is strong and resistant to deformation and which has a large surface area.

It is preferred that the anchoring ribs have a mutual spacing of at least 10 mm, preferably at least 15 mm. In this way, a sufficient degree of anchoring is achieved while keeping the handle design simple.

Additionally, or alternatively, the anchoring means comprise through holes provided in the handle section through which opposing portions of the gripping layer are connected. In this embodiment the gripping layer extends through the handle section, thus securely fastening the layer.

In an advantageous embodiment the handle section is provided with reinforcing ribs having through holes through which the gripping layer may extend. This allows the gripping layer material, during production of the container, to flow from one side of the reinforcing rib to the other, thus limiting the number of injection points and further securing the layer.

In a further advantageous embodiment the at least one side wall provided with a handle section defines an upper rim of the container, and the gripping layer protrudes between 0.5 and 3 mm above the upper rim, preferably about 2 mm. Such a gripping layer protruding above the upper rim of the container provides additional friction when stacking containers, preventing stacked containers from sliding when transported.

It is preferred that the thermoplastic material of the gripping layer has a Shore A hardness ranging from 40 to 70, more preferably from 50 to 60, and/or a Shore D hardness ranging from 7 to 17. These properties both provide a comfortable grip of the handle and a good bonding of the gripping layer. A Shore A hardness of approximately 55 and a Shore D hardness of approximately 12 are most preferred.

It is further preferred that the thermoplastic material is styrene ethylene butadyene styrene (SEBS) and/or that the plastics material is high density polyethylene (HDPE). The present inventor has found that SEBS has excellent bonding properties when injection moulded onto plastics such as polyethylene, in particular high density polyethylene ("HDPE"). As a result, the combination of these materials is extremely suitable for use in container handles as discussed above.

Although it is preferred to use the combination SEBS and polyethylene or HDPE together with the anchoring means discussed above, it would also be possible to use this combination of materials without the anchoring means.

Accordingly, the present invention further provides a container for storing and/or transporting objects, the container being made of a plastics material and comprising a base extending in a first direction and at least two side walls extending from the base in a second, substantially perpendicular direction, wherein at least one side wall is provided with a handle section and a gripping layer at least partially embedded in the handle section, the gripping layer being made out of a thermoplastic material having a smaller hardness than said plastics material, wherein the thermoplastic material is styrene ethylene butadyene styrene, the container being made of high density polyethylene.

The handle section discussed above is preferably integral with the respective side wall and, more preferably, integral with the entire container. However, the present invention also provides a handle for use in a container as defined above. Such a handle can be made as a separate part which is then inserted into the container and held in place by a suitable mechanism, for example the mechanism disclosed in Belgian Patent BE 1.013.062 (D. W. Plastics). A separately made handle of the present invention advantageously is a central handle in a crate having integral handles in at least two side walls.

There are several ways in which a container and a handle according to the present invention can be manufactured. In above-mentioned European Patent Application EP 1.000.865 it is disclosed that after the crate has been injection moulded in a mould without the relatively soft layers, these layers are provided in a second mould by means of injection moulding. Alternatively, the container and the gripping layers can be co-moulded simultaneously in the same mould, or gripping layer portions could be pre-fabricated and then placed in the container mould. The latter method is relatively time-consuming as it requires the gripping layer portions to be carefully arranged in the mould, while the former method is relatively difficult to implement. Moulding the gripping layers in a second mould on the container is preferred as it imposes fewer restrictions on the dimensions of the gripping layers.

It has been found, however, that during this so-called "overmoulding" process the handle sections of the container may be deformed due to the high temperature and pressure. The present inventor has found a solution to this problem.

Accordingly, the present invention additionally provides a method of producing a container as defined above, the method comprising the steps of:
- moulding a container body made of a plastics material using a first mould,
- moulding a gripping layer of thermoplastic material onto selected sections of the container body using a second, separate mould,
wherein the container body comprises a handle section, and wherein the method further comprises the step of:
- supporting the handle section using a support element during the moulding of the gripping layer.
By supporting the handle section when it is exposed to a high temperature and a high pressure, deformation of the handle is prevented. Preferably, the support element comprises a retractable rod. This rod is retracted at the end of the second moulding step or as soon as the high temperature and pressure have passed.

In a preferred embodiment the handle section is provided with a reinforcement rib, the support element resting against the reinforcement rib during the moulding of the gripping layer and the reinforcement rib being substantially flush with the gripping layer. This prevents the support element from causing a hole or an irregularity to form in the gripping layer when it is retracted. In addition, using the reinforcement rib optimises the support given to the handle section.

The present invention will further be explained below with reference to exemplary embodiments illustrated in the accompanying drawings, in which:
Fig. 1 schematically shows, in perspective, an embodiment of a container according to the present invention.
Fig. 2 schematically shows a first embodiment of anchoring means according to the present invention.
Fig. 3 schematically shows a second embodiment of anchoring means according to the present invention.
Fig. 4 schematically shows a third embodiment of anchoring means according to the present invention.
Fig. 5 schematically shows a fourth embodiment of anchoring means according to the present invention.
Fig. 6 schematically shows, in a cross-sectional view, a detail of the anchoring means of Fig. 5.
Fig. 7 schematically shows, in a cross-sectional view, the anchoring means of Fig. 5.
Fig. 8 schematically shows a first embodiment of a container handle according to the present invention seen from outside the container.
Fig. 9 schematically shows the first embodiment of a container handle according to the present invention seen from inside the container.
Fig. 10 schematically shows a second embodiment of a container handle according to the present invention seen from inside the container.
Fig. 11 schematically shows a third embodiment of a container handle according to the present invention seen from inside the container.
Fig. 12 schematically shows an alternative embodiment of a handle according to the present invention.
Fig. 13 schematically shows, in perspective, a fifth embodiment of anchoring means according to the present invention.
Fig. 14 schematically shows, in cross-section, a sixth embodiment of anchoring means according to the present invention.
Fig. 15 schematically shows, in perspective, a strip for providing a handle according to the present invention.
Fig. 16 schematically shows, in a cross-sectional view, a handle provided with the strip of Fig. 15.

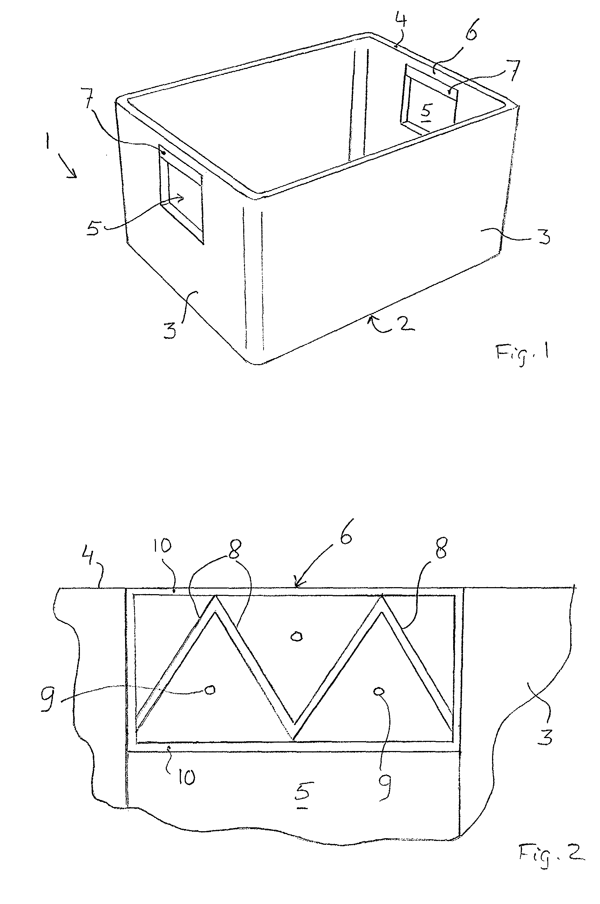

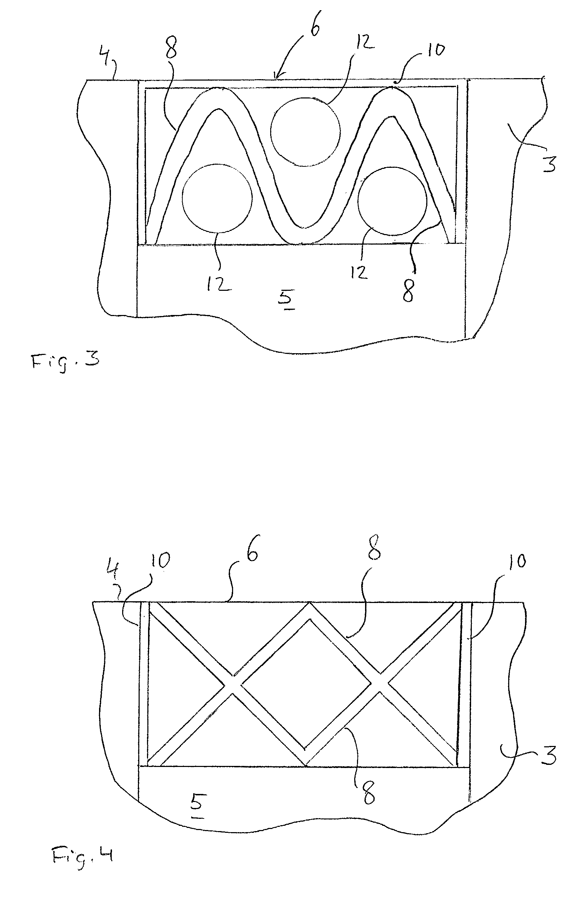

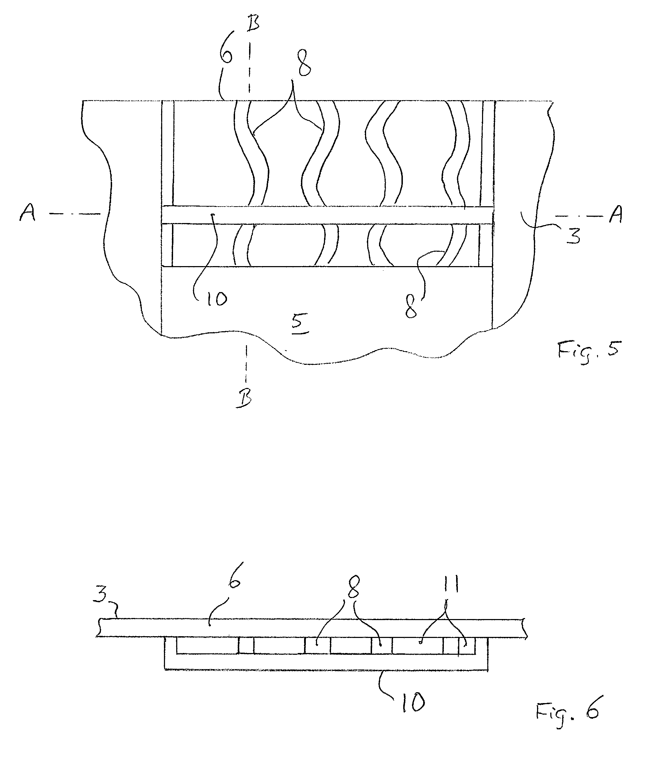

The container 1 shown merely by way of non-limiting example in Fig. 1 comprises a base 2 and side walls 3. The lower edges of the side walls 3 are connected to the base 2, while the upper edges of the side walls 3 define the upper rim 4 of the container 1. In this particular example the container 1 is a bottle crate which may be provided with suitable partitions (not shown) for accommodating bottles. Also, the side walls 3 are in this example integral with the base 2, the container being integrally moulded from a suitable plastics material such as high density polypropylene ("HDP") or high density polyethylene ("HDPE").

As shown in Fig. 1, two of the side walls have openings 5 so to provide handle sections 6 of which at least the lower edges are covered with a layer of thermoplastic material. This gripping layer 7 serves to provide a better and more comfortable grip for any person lifting or carrying the container. In the preferred embodiment the layer 7 has a thickness of approximately 2 mm, although layers having a smaller (e.g. 1 mm) or greater (e.g. 5 mm) can also be applied. In addition, a gripping layer may be applied on a central handle (not shown in Fig. 1) as disclosed in Belgian Patent BE 1.012.244 mentioned above.

The gripping layer 7 may be made of any suitable relatively soft material, such as a thermoplastic material, but is in accordance with the present invention preferably made of SEBS (styrene ethylene butadyene styrene) or its equivalents because of its excellent bonding properties, in particular when the handle section (and therefore, in the embodiment of Fig. 1 which has integral handles, the container) is made of HDPE (high density polyethylene). SEBS is commercially available and is for example sold under the name of DRYFLEX (trademark) 955501 by Nolato Elastoteknik, Sweden.

In accordance with the present invention, the bonding of the gripping layer 7 and the handle section 6 is enhanced by either a suitable choice of materials as discussed above, or providing anchoring means, or both. An example of anchoring means in accordance with the present invention is shown in Fig. 2 where only part of a container 1 is shown. The handle section 6 is shown here without the gripping layer 7 for the sake of clarity of the illustration.

The handle section 6 of Fig. 2 is bordered by reinforcement ribs 10 and is, in accordance with the present invention, provided with anchoring ribs 8 and anchoring holes 9. The anchoring ribs 8 are shown to extend substantially diagonally, that is, in both the horizontal and vertical direction of the plane defined by the handle section 6. This ensures an excellent fixation of the gripping layer as any movement in the plane of the handle section is prevented. In addition, the anchoring ribs enlarge the contact area of the handle section, thus providing an even better bonding. The anchoring ribs shown in Fig. 2 leave triangular areas the sides of which measure about 30 mm, but it will be understood that other dimensions are also possible. In each of the triangular areas an anchoring hole 9 is arranged. These through holes allow the gripping layers of the two opposite sides of the handle section 6 to be mutually connected, thus providing an even improved anchoring. It is noted that the anchoring holes 9 may be used independently of the anchoring ribs 8 and that embodiments can be envisaged in which either anchoring ribs or anchoring holes are present, but not both as in Fig. 2.

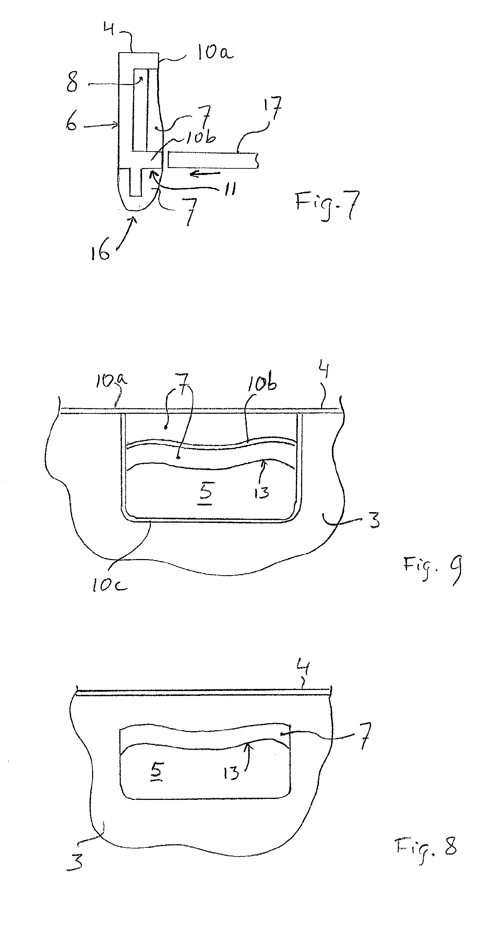

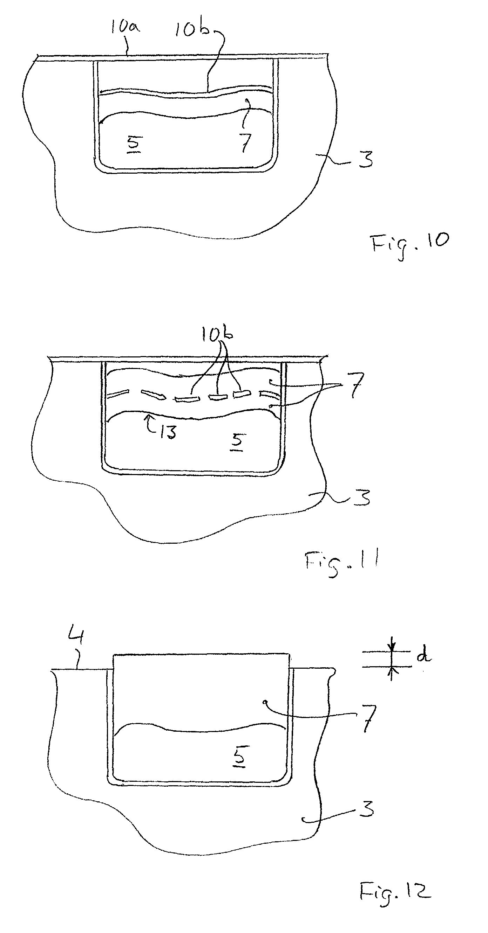

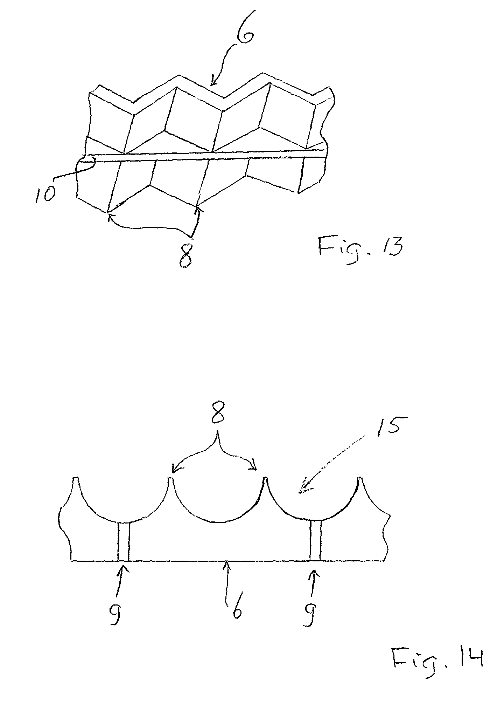

Another embodiment is shown in Fig. 3 where the anchoring ribs 8 together form a meandering structure. Here anchoring bowls 12 are provided to increase the surface area of the handle section 6 and to provide increased resistance against lateral movements of the gripping layer. These anchoring bowls 12 may have a diameter of approximately 20 mm and a depth of approximately 5 mm. These anchoring bowls 12 may be used independently of the anchoring ribs 8 and the anchoring holes 9. In addition, embodiments may be envisaged in which the bowls 12 are provided with anchoring holes (not shown in Fig. 3).

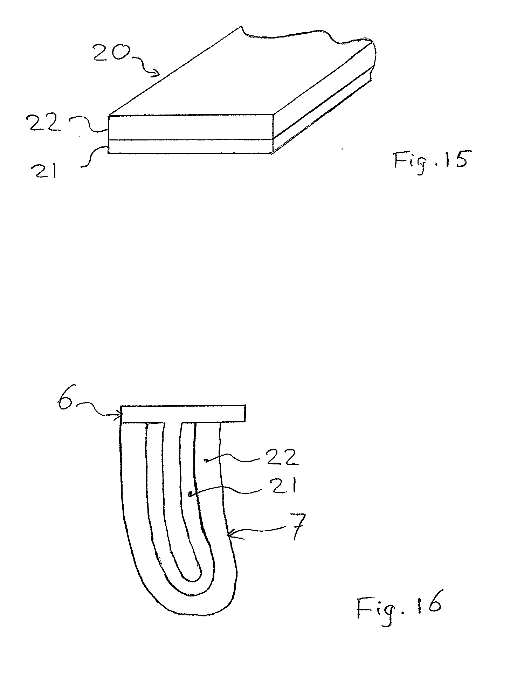

As shown in Fig. 4, the anchoring ribs 8 may cross. Instead of a structure of crossing anchoring ribs, the handle section 6 (or at least that part of the handle section 6 on which the gripping layer is to be applied) can be provided with an undulating surface having a one or two-dimensional "wave" structure. Such a structure has both an improved stability and an increased surface area resulting in an improved bonding of the gripping layer.

In the embodiment of Fig. 5, the anchoring ribs 8 extend substantially vertically but are shown to have a "wave" shape, thus preventing any vertical movement of the gripping layer. Also, a reinforcement rib 10 is shown to extend in front of the anchoring ribs 8, leaving space behind the reinforcement rib for the gripping layer material to flow through. This is more clearly shown in Fig. 6, which is a cross-sectional view of the handle section 6 along a line A-A. In the embodiment shown in Fig. 6, he reinforcement rib 10 extends substantially horizontally in front of the anchoring ribs 8, leaving flow openings 11 for the gripping layer material to flow through during moulding. It will be understood that these flow openings 11 provide additional anchoring of the gripping layer.

The practical application of the flow openings 11 is further illustrated in Fig. 7 where a handle section 6 provided with a gripping layer 7 is shown in cross-section. The handle section 6 of Fig. 7 has anchoring ribs 8 and reinforcement ribs 10a, 10b. During the gripping layer moulding process the material is injected at 16. The material then flows through the mould (not shown) and passes the reinforcement rib 10 at the openings 11 to form the upper part of the gripping layer 7.

It has been found that the high temperature and high pressure applied during the moulding of the gripping layer may result in a deformation of the handle section 6. According to a further aspect of the present invention, therefore, a support element 17 is inserted into the mould to press against the lower reinforcement rib 10 and thus to support the handle section 6. In this way, a twisting of the handle section is prevented. The support element 17 preferably is a rod which is retracted from the mould at the end of the moulding process. By applying pressure directly against the reinforcement rib 10 which is itself not covered by the gripping layer 7, the supporting of the handle element does not affect the gripping layer. It could however be envisaged that the (lower) reinforcement rib were also enveloped by the gripping layer, or that the support rod 17 were to press against an anchoring rib 8 or against the base plate of the handle section.

An example of a completed handle section is shown in Figs. 8 and 9 from the outside and from the inside of the container respectively. In this embodiment, the handle section 6 is shown to have a lower edge 13 which is not straight, that is, undulating in order to provide a better and more comfortable hand grip. On the outside of the container, as shown in Fig. 8, only a relatively small area of the handle section is covered by gripping layer 7, for example only an area approximately 20 mm high. On the inside of the container however, as shown in Fig. 9, the gripping layer 7 extends much further upwards, in the example shown to the upper reinforcement rib 10a bordering the upper rim 4 of the container. This results in much more comfort for the fingers of the person carrying or lifting the container. The middle reinforcement rib 10b is preferably provided with flow openings (11 in Fig. 6). A lower reinforcement rib 10c borders the handle opening 5.

It is of course possible for the gripping layer 7 not to extend to the upper reinforcement rib 10a but only up to the middle reinforcement rib 10b, as shown in Fig. 10. It will further be understood that handle sections having fewer than three reinforcement ribs can also be envisaged without departing from the scope of the present invention. Similarly, the present invention also encompassed handle sections having gripping layers extending inside and outside the container over substantially the same area.

In the embodiment of Fig. 11 a handle section has an interrupted middle reinforcement rib 10b to allow the gripping layer material to flow through. In this case, the flow openings 11 shown in Fig. 6 may be dispensed with, resulting in a simpler and therefore more economical container mould design.

An alternative handle design is shown in Fig. 12 where the gripping layer 7 extends above the upper rim 4 of the container by a distance d of approximately 1 to 4 mm, preferably approximately 2 mm. This protruding gripping layer provides additional friction when stacking containers, thus preventing any sliding of the stacked containers. Such a protruding gripping layer can also be applied on metal containers, for example beer kegs, and not only at the upper rim but also at the lower rim. In that case the protruding relatively soft layer acts as a friction layer for preventing the container to slide relative to the surface (e.g. the top deck of a pallet) on which it is positioned.

While the embodiments of a handle section 6 shown in Figs. 2-6 have a relatively flat surface from which anchoring ribs protrude, it is also possible to have an undulating or zigzag handle section surface. The embodiment shown in Fig. 13, for example, has a generally zigzag-shaped structure provided with a reinforcement rib 10. The edges of the zigzag structure constitute anchoring ribs 8. In the embodiment shown, the reinforcement rib 10 does not protrude beyond the zigzag structure. It is preferred to have a reinforcement rib present at both sides of the structure but this is not essential. The spacing of the edges or ribs 8 preferably is approximately 20 mm, but other spacings may also be used, for example 10, 15, 25 or 30 mm.

The structure of Fig. 13 has the advantage of being strong and substantially resistant to deformation during the overmoulding process. In addition, its surface area is large compared to the "flat" designs, resulting in a good bonding of the gripping layer (not shown in Fig. 13). Anchoring through holes (9 in Fig. 2) may also be present.

An alternative embodiment of a non-flat structure is shown in the cross-sectional view of Fig. 14 where the handle section 6 is provided with substantially curved recesses 15 defining the anchoring ribs or "teeth" 8. This structure also provides a large surface area. In addition, (optional) anchoring holes 9 are provided. Although the structure of Fig. 14 is shown to be substantially flat at one side, it will be understood that curved recesses could be provided on both sides of the handle section 6.

A container of the present invention can be made in various ways, but it is preferred to (injection) mould the container using a first mould, and then to (injection) mould the thermoplastic material upon selected sections of the container using a second, separate mould. This does not require any modifications to the first mould and allows an excellent control of the moulding process in the second mould. In addition, it allows the gripping layer to project beyond the outer dimensions of the container.

It is preferred that the gripping layers of all handles are applied in the same production step, thus minimising the production cycle time of the container. In a bottle crate having handles in all four side walls and having an additional central handle the five handles could be provided with a gripping layer substantially simultaneously using the "overmoulding" process discussed above.

Alternatively, the container and the thermoplastic material could be coinjected, that is, injection moulded substantially simultaneously in the same mould. It is also possible to first mould the thermoplastic material into elements which are then placed in the mould in which the container is to be moulded, but this method is relatively labour-intensive. The layer of thermoplastic material 7 can be countersunk to avoid excess compression.

An alternative method of applying a gripping layer in accordance with the present invention is shown in Figs. 15 and 16. A strip 20 comprising a HDPE film 21 and a thermoplastic layer 22 is co-extruded. The thermoplastic layer 22 is preferably made of SEBS, thus providing an excellent bond with the HDPE film 21. The HDPE film 21 may have a thickness of about 1 mm, while the thermoplastic film 22 may have a thickness of about 2 mm, but a greater of smaller thickness of each layer can also be envisaged. The strip 20 is cut into sections having an appropriate length and is then heated and applied on a handle which is preferably made of HDPE. The hot HDPE of the film 21 and the handle 6 bond and the resulting handle is shown in Fig. 14, the gripping layer 7 being provided by the thermoplastic layer 22 of the strip 20. The handle 6 may be an integral or a separate container handle.

All of the methods described above can also be used to provide a handle which is produced separately and then mounted on a container. Such a handle may advantageously be provided with internal or external reinforcement elements made of polyamide and/or glass fibre reinforced polyester. In particular pultruded profiles can advantageously be used to reinforce the handle. In this way, a very strong and reliable handle may be obtained. A separately produced handle may, irrespective of the presence of any reinforcements, be mounted on the container by means of, for example, snap-fitting or welding, in particular laser welding or heat-seal welding.

As will be clear from the above, the present invention is based upon the insight that a good bonding between the gripping layer and the handle section is necessary to provide a stable gripping layer and to avoid any hygienic issues. The present invention is also based upon the further insight that a good bonding may be achieved by either (mechanical) anchoring means, such as anchoring ribs or anchoring holes, or suitable materials properties, or both. The present invention additionally benefits from the insight that the processes involved in applying a gripping layer on a plastic container may require the handle section of the container to be temporarily supported.

It will be understood by those skilled in the art that the present invention is not limited to the embodiments illustrated above and that many modifications and additions may be made without departing from the scope of the invention as defined in the appending claims.

## Claims

1. A container (1) for storing and/or transporting objects, the container being made of a plastics material and comprising a base (2) extending in a first direction and at least two side walls (3) extending from the base in a second, substantially perpendicular direction, at least one side wall being provided with a handle section (6) covered at least partially by a gripping layer (7) made out of a thermoplastic material having a smaller hardness than said plastics material and being applied on the handle section during a moulding process, wherein the handle section (6) is provided with anchoring means (8; 9; 12) for anchoring the gripping layer onto the handle section.

2. The container according to claim 1, wherein the anchoring means comprise anchoring ribs (8) protruding from a plane defined by the handle section (6), the anchoring ribs being at least partially embedded in the gripping layer (7).

3. The container according to claim 2, wherein the anchoring ribs (8) are shaped so as to extend in more than one direction in said plane.

4. The container according to claim 3, wherein the anchoring ribs (8) have a substantially triangular and/or meandering shape.

5. The container according to claim 2 or 3, wherein the anchoring ribs (8) are defined by curved recesses (15) in the handle section (6).

6. The container according to claim 2 or 3, wherein the anchoring ribs (8) are defined by edges of a zigzag structure of the handle section (6).

7. The container according to any of claims 2-6, wherein the anchoring ribs (8) have a mutual spacing of at least 10 mm, preferably at least 15 mm.

8. The container according to any of claims 2-7, wherein the anchoring means comprise through holes (9) provided in the handle section (6) through which opposing portions of the gripping layer (7) are connected.

9. The container according to any of the preceding claims, wherein the handle section (6) is provided with reinforcing ribs (10) having through holes (11) through which the gripping layer (7) may extend.

10. The container according to any of the preceding claims, wherein the at least one side wall provided with a handle section (6) defines an upper rim of the container, and wherein the gripping layer (7) protrudes between 0.5 and 3 mm above the upper rim, preferably about 2 mm.

11. The container according to any of the preceding claims, wherein the thermoplastic material has a Shore A hardness ranging from 40 to 70, preferably from 50 to 60, and/or a Shore D hardness ranging from 7 to 17.

12. The container according to any of the preceding claims, wherein the thermoplastic material is styrene ethylene butadyene styrene.

13. The container according to any of the preceding claims, wherein the plastics material is high density polyethylene.

14. A container (1) for storing and/or transporting objects, the container being made of a plastics material and comprising a base (2) extending in a first direction and at least two side walls (3) extending from the base in a second, substantially perpendicular direction, wherein at least one side wall is provided with a handle section (6) and a gripping layer (7) at least partially embedded in the handle section, the gripping layer (7) being made out of a thermoplastic material having a smaller hardness than said plastics material, wherein the thermoplastic material is styrene ethylene butadyene styrene, the container (1) being made of high density polyethylene.

15. The container according to claim 14, wherein the thermoplastic material has a Shore A hardness ranging from 40 to 70, preferably from 50 to 60, and/or a Shore D hardness ranging from 7 to 17.

16. A handle for use in a container (1) according to any of the preceding claims.

17. A method of producing a container (1) according to any of claims 1-15, the method comprising the steps of:
• moulding a container body made of a plastics material using a first mould,
• moulding a gripping layer (7) of thermoplastic material onto selected sections of the container body using a second, separate mould,
wherein the container body comprises a handle section (6), and wherein the method further comprises the step of:
• supporting the handle section (6) using a support element (17) during the moulding of the gripping layer.

18. The method according to claim 17, wherein the support element (17) comprises a retractable rod.

19. The method according to claim 17 or 18, wherein the handle section (6) is provided with at least one reinforcement rib (10), the support element (17) resting against the reinforcement rib during the moulding of the gripping layer and the reinforcement rib being substantially flush with the gripping layer (7).
